# EUROPÄISCHE PATENTSCHRIFT

(11) **EP 2 848 824 B1**
(45) Veröffentlichungstag und Bekanntmachung des Hinweises auf die Patenterteilung: **07.06.2017**
(21) Anmeldenummer: 14184876.2
(22) Anmeldetag: 16.09.2014
(51) Int. Cl.: F16B 2/00, C08J 5/18

(54) **Reibungserhöhende Folie**
Friction increasing film
Feuille augmentant la friction

(30) Priorität: 17.09.2013 DE 102013218550
(43) Veröffentlichungstag der Anmeldung: 18.03.2015
(73) Patentinhaber: Aktiebolaget SKF, 415 50 Göteborg (SE)
(72) Erfinder: von Schleinitz, Thilo, 97422 Schweinfurt (DE)
(74) Vertreter: Kuhstrebe, Jochen

(56) Entgegenhaltungen:
- EP-A1- 0 961 038
- WO-A1-2012/076584
- CH-A- 439 697
- DE-A1-102005 006 210
- US-A1- 2010 107 509

## Beschreibung

Die Erfindung betrifft eine reibungserhöhende Folie. Weiterhin betrifft die Erfindung einen Folienverbund aus einer Trägerfolie und einer reibungserhöhenden Folie, ein Verfahren zur Herstellung einer reibungserhöhenden Folie, eine Anordnung aus einem ersten Maschinenteil und einem zweiten Maschinenteil und ein Verfahren zur Ausbildung einer reibschlüssigen Verbindung.

Eine gattungsbildende reibungserhöhende Folie ist aus der DE 10 2005 006 210 A bekannt.

Maschinenteile können beispielsweise dadurch miteinander zuverlässig verbunden werden, dass sie im Bereich von dafür vorgesehenen Anlageflächen mit einem hohen Anpressdruck gegeneinander gepresst werden. Der Anpressdruck kann beispielsweise mittels Bolzen, Schrauben oder ähnlichen Verbindungsmitteln erzeugt werden, welche die Maschinenteile in einer Richtung quer, insbesondere senkrecht, zu den Anlageflächen gegeneinander verspannen. Solange die aus der Reibung zwischen den Anlageflächen resultierende Reibungskraft nicht überwunden wird, ist der Verbund aus den Maschinenteilen mechanisch stabil, d. h. es kommt nicht zu einer Relativbewegung zwischen den Maschinenteilen. Entsprechendes gilt auch im Hinblick auf das Reibmoment.

Die Höhe der Reibungskraft hängt vom Anpressdruck und vom Reibungskoeffizienten der Anlageflächen ab. Eine kritische Situation kann auftreten, wenn die auf den Verbund einwirkende Belastung so hoch ist, dass die maximal der belastenden Kraft entgegensetzbare Reibungskraft überwunden wird. In einer derartigen Situation werden die Verbindungsmittel, die primär für eine Zugbelastung ausgelegt sind, auf Scherung belastet und können versagen oder der Verbund kann durch innere Bewegungen zerstört werden. Der Verbund sollte deshalb so ausgelegt werden, dass die verfügbare Reibungskraft unter den vorgesehenen Betriebsbedingungen nicht von verschiebenden Kräften überschritten wird.

Eine hohe Reibungskraft kann durch einen hohen Anpressdruck und einen hohen Reibungskoeffizienten erreicht werden. Innerhalb gewisser Grenzen ist die Erzeugung einer hohen Reibungskraft durch einen entsprechend hohen Anpressdruck noch relativ einfach möglich. Bei sehr hohen Anpressdrücken werden jedoch immer höhere Anforderungen an die Zugbelastbarkeit der Verbindungsmittel und auch an die Druckbelastbarkeit der zu verbindenden Maschinenteile gestellt, die sich zunehmend schwerer oder nur noch mit einem unvertretbaren Aufwand erfüllen lassen. In diesem Zusammenhang ist es aus der WO 2012/076584 A1 bekannt, eines der beiden Maschinenteile im Bereich der vorgesehenen Anlagefläche mit einem Lack auf Polyurethan-Basis zu beschichten, der Hartstoff-Partikel aus einer Titan-Bor-Verbindung enthält. Mit dem bekannten Lack lassen sich sehr hohe Reibwerte erzielen. Allerdings kann es durch die Trocknungszeit des Lacks zu Zeitverzögerungen bei der Verbindung der Maschinenteile kommen.

Der Erfindung liegt die Aufgabe zugrunde, mit einem geringen Aufwand in einer kurzen Prozesszeit zwischen den Anlageflächen zweier Maschinenteile einen möglichst hohen Reibungskoeffizienten zu erzielen.

Diese Aufgabe wird durch die Merkmalskombinationen der nebengeordneten Ansprüche gelöst.

Die erfindungsgemäße reibungserhöhende Folie weist Hartstoff-Partikeln aus einer Titan-Bor-Verbindung auf, welche derart in eine Polyurethan-Matrix eingebettet sind, dass wenigstens einige der Hartstoff-Partikel aus der Polyurethan-Matrix herausragen. Weiterhin enthält die erfindungsgemäße reibungserhöhende Folie ein korrosionsschützendes Material.

Unter einer Folie im Sinne der Erfindung ist ein bahnförmiges Material zu verstehen, das leicht verformbar ist. Eine derartige Folie kann entweder freitragend ausgebildet sein oder temporär bis zur Verarbeitung durch eine Substratfolie gestützt sein, von der sie sich leicht und ohne Beschädigung ablösen lässt. Eine in flüssiger Form auf einen starren Körper aufgebrachte und mit dem starren Körper stoffschlüssig verbundene Materialschicht stellt keine Folie im Sinne der Erfindung dar.

Unter einer reibungserhöhenden Folie im Sinne der Erfindung ist eine Folie zu verstehen, die zu einer verglichen mit einer direkten Berührung zweier Stahlflächen erhöhten Reibung führt, wenn die Folie zwischen den beiden Stahlflächen geklemmt ist.

Die Erfindung hat den Vorteil, dass sie mit einem geringen Aufwand in einer kurzen Prozesszeit die Erzielung eines sehr hohen Reibungskoeffizienten ermöglicht. Ein weiterer Vorteil besteht darin, dass keine aufwendige Oberflächenvorbereitung der Oberflächen der Maschinenteile erforderlich ist, zwischen denen der hohe Reibungskoeffizient erzielt werden soll.

Die Hartstoff-Partikel können Titandiborid aufweisen oder aus Titandiborid bestehen. Titandiborid vereint in sich eine sehr hohe Härte bei geringer Splitterneigung und eine gute elektrische Leitfähigkeit. Dadurch kann eine unerwünschte elektrische Isolierung durch die reibungserhöhende Folie vermieden werden. Außerdem wird die Möglichkeit geschaffen, die reibungserhöhende Folie nahezu vollflächig elektrisch leitend auszubilden. Dies kann sich beispielsweise im Hinblick auf die Ausbildung eines wirksamen Korrosionsschutzes vorteilhaft auswirken.

Die reibungserhöhende Folie ist vorzugsweise freitragend ausgebildet. Die Dicke der reibungserhöhenden Folie kann wenigstens 20 µm betragen. Weiterhin kann die Dicke der reibungserhöhenden Folie maximal 80 µm betragen. Insbesondere kann die kann die Dicke der reibungserhöhenden Folie wenigsten 30 µm und/oder maximal 60 µm oder lediglich 45 µm betragen. Als Dicke der reibungserhöhenden Folie wird jeweils die durch die Polyurethan-Matrix ausgebildete Dicke angesehen, soweit nichts anderes erwähnt ist. Die aus der aus der Polyurethan-Matrix herausragenden Hartstoff-Partikel werden bei der Ermittlung der Dicke der Folie nicht berücksichtigt.

Die reibungserhöhende Folie weist eine erste Hauptfläche und eine zweite Hauptfläche auf. Wenigstens einige der Hartstoff-Partikel können im Bereich der ersten Hauptfläche um einen Überstand aus der Polyurethan-Matrix herausragen und im Bereich der zweiten Hauptfläche mit der Polyurethan-Matrix abschließen oder von dieser mit einer Restdicke abgedeckt sei, wobei der Überstand der Hartstoff-Partikel jeweils größer als die zugehörige Restdicke sein kann. Wenigstens einige der Hartstoff-Partikel können größere Abmessungen aufweisen als der Dicke der reibungserhöhenden Folie entspricht.

Die reibungserhöhende Folie kann so ausgebildet sein, dass vor dem Einbau der reibungserhöhenden Folie lediglich im Bereich der ersten Hauptfläche Hartstoff-Partikel aus der Polyurethan-Matrix herausragen. Weiterhin kann die reibungserhöhende Folie so ausgebildet sein, dass nach dem Einbau der reibungserhöhenden Folie im Bereich der ersten Hauptfläche und im Bereich der zweiten Hauptfläche Hartstoff-Partikel aus der Polyurethan-Matrix herausragen. Unter dem Einbau der reibungserhöhenden Folie ist jeweils der bestimmungsgemäße Einsatz der reibungserhöhenden Folie gemeint, bei dem die reibungserhöhende Folie zwischen zwei Maschinenteilen eingeklemmt ist und dadurch den zwischen diesen Maschinenteilen wirksamen Reibwert erhöht. Beim Einbau können sich die Hartstoff-Partikel relativ zur Polyurethan-Matrix verschieben. Die Verschiebung kann insbesondere senkrecht zur ersten Hauptfläche und zur zweiten Hauptfläche der reibungserhöhenden Folie erfolgen.

Das korrosionsschützende Material kann elektrisch leitend sein. Insbesondere kann das korrosionsschützende Material eine elektrische Leitfähigkeit von wenigstens 1x10⁶ A/Vm, vorzugsweise wenigsten 10x10⁶ A/Vm aufweisen. Typische Werte liegen zwischen 16,7 und 18,3x10⁶ A/Vm. Bei dem korrosionsschützenden Material kann es sich um einen Feststoff handeln. Dies hat insbesondere auch den Vorteil, dass die Kompressibilität einer mit dem Lack ausgebildeten Schicht auch bei starker Druckeinwirkung begrenzt ist. Daraus resultiert die Möglichkeit, mit einer derartigen Schicht einen dauerhaft mechanisch stabilen Verbund auszubilden. Dabei kann das korrosionsschützende Material eine geringere Härte als die Hartstoff-Partikel aufweisen. Weiterhin kann das korrosionsschützende Material wenigstens zum Teil in Pulverform vorliegen. Ebenso kann das korrosionsschützende Material wenigstens zum Teil in Lamellenform vorliegen. Insbesondere kann das korrosionsschützende Material Zink aufweisen oder aus Zink bestehen.

Die reibungserhöhende Folie kann zusätzlich zu den Hartstoff-Partikeln aus einer Titan-Bor-Verbindung weitere Hartstoff-Partikel enthalten. Diese weiteren Hartstoff-Partikel können im Hinblick auf eine andere Funktion als die Hartstoff-Partikel optimiert sein. Beispielsweise können weitere Hartstoff-Partikel eingesetzt werden, die eine nur geringfügig streuende Korngröße aufweisen und demgemäß als Abstandshalter zwischen den Maschinenteilen eingesetzt werden können. Beispielsweise können die weiteren Hartstoff-Partikel Borcarbid aufweisen oder aus Borcarbid bestehen.

Die Erfindung bezieht sich weiterhin auf einen Folienverbund aus einer Trägerfolie und einer reibungserhöhenden Folie, die mit der Trägerfolie lösbar verbunden ist, wobei die reibungserhöhende Folie Hartstoff-Partikel aus einer Titan-Bor-Verbindung aufweist.

Die Trägerfolie kann aus einem Kunststoff hergestellt sein, auf dem Polyurethan allenfalls eine geringe Haftwirkung hat. Insbesondere kann die Trägerfolie aus Teflon, Silikon oder Polyethylen hergestellt sein. Die Trägerfolie kann dünner sein als die reibungserhöhende Folie. Insbesondere kann die Dicke der Trägerfolie maximal 75 %, vorzugsweise maximal 50 % der Dicke der reibungserhöhenden Folie entsprechen.

Zudem bezieht sich die Erfindung auf die Verwendung einer reibungserhöhende Folie, mit Hartstoff-Partikeln aus einer Titan-Bor-Verbindung, welche derart in eine Polyurethan-Matrix eingebettet sind, dass wenigstens einige der Hartstoff-Partikel aus der Polyurethan-Matrix herausragen, zur Ausbildung einer reibschlüssigen Verbindung zwischen einem ersten Maschinenteil und einem zweiten Maschinenteil.

Außerdem bezieht sich die Erfindung auf ein Verfahren zur Herstellung einer reibungserhöhenden Folie, wobei ein Polyurethanlack, welcher Hartstoff-Partikel aus einer Titan-Bor-Verbindung enthält, auf eine Trägerfolie aufgesprüht wird.

Bei dem Lack handelt es sich vorzugsweise um ein Einkomponenten-System. Ein derartiger Lack lässt sich mit sehr wenig Aufwand verarbeiten. Es ist aber auch möglich, den Lack als ein Zweikomponenten-System auszubilden. Der Lack kann ein Lösungsmittel, beispielsweise Naphta, enthalten.

Der Lack kann in einer Schichtdicke im feuchten Zustand von wenigstens 20 µm, vorzugsweise wenigstens 25 µm aufgesprüht werden. Weiterhin kann der Lack in einer Schichtdicke im feuchten Zustand von höchstens 80 µm, vorzugsweise höchstens 60 µm aufgesprüht werden.

Während des Aufsprühens kann die Trägerfolie relativ zur Sprühvorrichtung bewegt werden. Weiterhin kann die Trägerfolie während des Aufsprühens vorgespannt werden.

Alle im Folgenden aufgeführten Angaben bzgl. prozentualer Anteile von Stoffen beziehen sich jeweils auf das Volumen, d. h. bei den %-Angaben handelt es ist jeweils um Vol%.

Bezogen auf das Volumen des Lacks inklusive Lösungsmittel kann der Anteil des Lösungsmittels 20-40% betragen. Dabei kann der Lack inklusive Lösungsmittel einen Anteil an Hartstoff-Partikeln von wenigstens 10 %, vorzugsweise wenigstens 20 % aufweisen. Falls weitere Hartstoff-Partikel vorhanden sind, kann der Lack einen Anteil an Hartstoff-Partikeln und weiteren Hartstoff-Partikeln von insgesamt wenigstens 10 %, vorzugsweise wenigstens 20 % aufweisen. Weiterhin kann der Lack inklusive Lösungsmittel einen Anteil an korrosionsschützendem Material von wenigstens 10 %, vorzugsweise wenigstens 20 % aufweisen.

Bezogen auf das Volumen ohne Lösungsmittel kann der Lack einen Anteil an Binder von 20-40% enthalten. Ein höherer Binder-Anteil hat einen unzureichenden Korrosionsschutz zur Folge. Weiterhin kann der Lack bezogen auf das Volumen ohne Lösungsmittel maximal 10 % Additive enthalten. Beispielsweise kann der Lack ein Thixotropierungsmittel als ein Additiv enthalten. Insgesamt kann der Lack bezogen auf das Volumen ohne Lösungsmittel einen Feststoffanteil ohne Binder von wenigstens 50 %, vorzugsweise wenigstens 70 % aufweisen.

Bezogen auf das Volumen des Lacks ohne Lösungsmittel, Binder und Additiven kann der Lack einen Anteil an Hartstoff-Partikeln von 30-70 %, insbesondere von 40-60% enthalten. Ein geringerer Anteil an Hartstoff-Partikeln hat deutlich niedrigere Reibwerte der reibungserhöhenden Folie zur Folge. Der Anteil an korrosionsschützendem Material kann bei der gleichen Bezugsgröße 70-30 %, insbesondere 60-40% betragen. Bei einem geringeren Anteil an korrosionsschützendem Material ergibt sich ein unzureichender Korrosionsschutz. Außerdem kann der Lack einen Anteil an weiteren Hartstoff-Partikeln von höchsten 30 %, vorzugsweise wenigstens 20 % als Substitution aufweisen.

Die Hartstoff-Partikel können eine mittlere Korngröße von höchstens 100 µm, vorzugsweise höchstens 60 µm aufweisen. Außerdem können die Hartstoff-Partikel eine minimale Korngröße von wenigstens 5 µm, vorzugsweise wenigstens 10 µm aufweisen. Weiterhin können die Hartstoff-Partikel eine maximale Korngröße von höchstens 150 µm, vorzugsweise höchstens 110 µm aufweisen.

Die Verteilung der Korngrößen der Hartstoff-Partikel kann so ausgebildet sein, dass maximal 75 % der Hartstoff-Partikel eine Korngröße kleiner als 36 µm aufweisen. Weiterhin können wenigstens 10 % der Hartstoff-Partikel eine Korngröße größer als 51 µm aufweisen. Wenigstens 5 % der Hartstoff-Partikel können eine Korngröße größer als 61 µm aufweisen. Wenigstens 2 % der Hartstoff-Partikel können eine Korngröße größer als 73 µm aufweisen. Außerdem kann vorgesehen sein, dass die Verteilungskurve für die Korngrößen, d. h. die prozentuale Anteile der Korngrößen aufgetragen über die Korngrößen, lediglich ein Maximum aufweist. Diese Werte gelten insbesondere für eine Dicke der reibungserhöhenden Folie 3 von 30 µm bis 45 µm. Die Korngrößen können dabei durch Siebung ermittelt werden. Demgemäß dürften beispielsweise bei einer Siebung mit einer Maschenweite von 36 µm maximal 75 % der Hartstoff-Partikel das Sieb passieren.

Die reibungserhöhende Folie kann von der Trägerfolie abgezogen werden.

Die Erfindung bezieht sich weiterhin auf eine Anordnung aus einem ersten Maschinenteil, das eine erste Anlagefläche aufweist und einem zweiten Maschinenteil, das eine zweite Anlagefläche aufweist. Zwischen der ersten Anlagefläche und der zweiten Anlagefläche ist die erfindungsgemäße reibungserhöhende Folie mit Hartstoff-Partikeln aus einer Titan-Bor-Verbindung angeordnet, welche derart in eine Polyurethan-Matrix eingebettet sind, dass wenigstens einige der Hartstoff-Partikel aus der Polyurethan-Matrix herausragen. Die erste Anlagefläche und die zweite Anlagefläche sind gegeneinander vorgespannt.

Das erste Maschinenteil und/oder das zweite Maschinenteil können als ein Lagerbauteil ausgebildet sein. Das Lagerbauteil kann als ein Lagerring, insbesondere als ein Innenring oder ein Außenring, insbesondere eines Wälzlagers oder eines Gleitlagers, ausgebildet sein. Bei der ersten Anlagefläche oder der zweiten Anlagefläche kann es sich beispielsweise um eine Stirnfläche eines Innenrings, eine Stirnfläche eines Außenrings, eine Stirnfläche eines Gehäuses oder eine Stirnfläche einer Wellenschulter handeln.

Schließlich bezieht sich die Erfindung auf ein Verfahren zur Ausbildung einer reibschlüssigen Verbindung zwischen einem ersten Maschinenteil und einem zweiten Maschinenteil. Dabei wird eine reibungserhöhende Folie von einer Trägerfolie, die mit der reibungserhöhenden Folie einen Folienverbund ausbildet, abgezogen und zwischen einer ersten Anlagefläche des ersten Maschinenteils und einer zweite Anlagefläche des zweiten Maschinenteils angeordnet. Dann werden das erste Maschinenteil und das zweite Maschinenteil im Bereich der ersten Anlagefläche und der zweite Anlagefläche gegeneinander gepresst. Dadurch werden wenigstens einige der in der reibungserhöhenden Folie enthaltenen Hartstoff-Partikel in die erste Anlagefläche und in die zweite Anlagefläche eingedrückt.

Die dadurch ausgebildeten formschlüssigen Mikroverbindungen haben einen sehr hohen Reibungskoeffizienten zur Folge.

Mit Hilfe eines in der reibungserhöhenden Folie enthaltenen Feststoffs, beispielsweise Zink, kann erreicht werden, dass die reibungserhöhende Folie bei später auftretenden höheren Anpressdrücken nicht mehr nennenswert komprimiert wird und es dadurch zu Maßveränderungen oder zu einer Verschleiß fördernden Mikrobewegungen oder zu einer Lockerung der Verbindung zwischen dem ersten Maschinenteil und dem zweiten Maschinenteil kommen kann. Durch die Hartstoff-Partikel alleine ist keine ausreichend stabile Abstützung der Anlageflächen gewährleistet, da die Hartstoff-Partikel mit zunehmendem Druck immer tiefer in die Anlageflächen eingedrückt werden.

Die Erfindung wird nachstehend anhand der in den Figuren dargestellten Ausführungsbeispiele näher erläutert.

Es zeigen
- Figur1: ein Ausführungsbeispiel eines erfindungsgemäß ausgebildeten Folienverbunds in einer schematischen Schnittdarstellung,
- Figur 2: ein Ausführungsbeispiel einer Anordnung zur Herstellung des in Figur 1 dargestellten Folienverbunds in einer perspektivischen Darstellung,
- Figur 3: ein Ausführungsbeispiel der erfindungsgemäßen reibungserhöhenden Folie in einer schematischen Schnittdarstellung und
- Figur 4: ein Ausführungsbeispiel einer erfindungsgemäß ausgebildeten reibschlüssigen Verbindung in einer schematischen Schnittdarstellung.

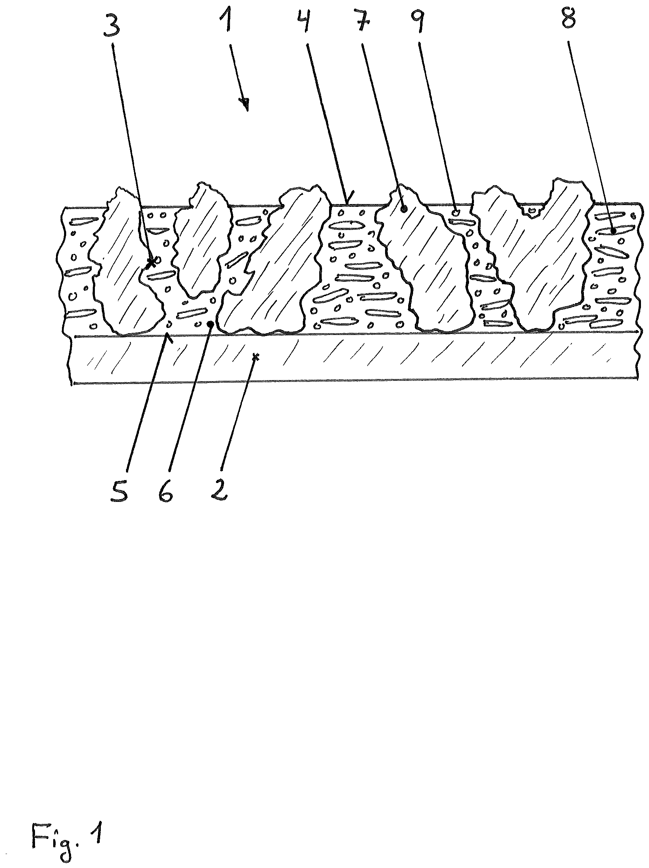

Figur 1 zeigt ein Ausführungsbeispiel eines erfindungsgemäß ausgebildeten Folienverbunds 1 in einer schematischen Schnittdarstellung. Der Folienverbund 1 weist eine Trägerfolie 2 und eine reibungserhöhende Folie 3 auf, die lösbar miteinander verbunden sind. Die reibungserhöhende Folie 3 verfügt über eine erste Hauptfläche 4 und eine zweite Hauptfläche 5. Die erste Hauptfläche 4 ist auf einer von der Trägerfolie 2 abgewanden Seite der reibungserhöhenden Folie 3 ausgebildet. Mit der zweiten Hauptfläche 5 liegt die reibungserhöhende Folie 3 an der Trägerfolie 2 an. Die reibungserhöhende Folie 3 weist eine Polyurethan-Matrix 6 auf, in die Hartstoff-Partikel 7 aus einer Titan-Bor-Verbindung, insbesondere aus Titandiborid, partiell eingebettet sind. Polyurethan wird im Folgenden auch mit PU abgekürzt. Die Hartstoff-Partikel 7 ragen aus der ersten Hauptfläche 4 der reibungserhöhenden Folie 3 heraus. Aus der zweiten Hauptfläche 5 der reibungserhöhenden Folie 3 ragen die Hartstoff-Partikel 7 nicht heraus, sondern schließen mit dieser bündig ab oder sind zu dieser in die Polyurethan-Matrix 6 zurückversetzt.

Weiterhin weist die reibungserhöhende Folie 3 ein lamellenartiges Korrosionsschutzmaterial 8, insbesondere in Form von Zinklamellen und ein pulvriges Korrosionsschutzmaterial 9, insbesondere in Form von Zinkpulver, auf.

Die Trägerfolie 2 kann aus einem Material hergestellt sein, an dem Polyurethan nahezu keine Haftung hat, beispielsweise Teflon, Silikon, Polyethylen usw. und eine Dicke von ca. 20 µm aufweisen. Die reibungserhöhende Folie 3 kann bzgl. der Polyurethan-Matrix 6, d. h. von der ersten Hauptfläche 4 zur zweiten Hauptfläche 5, eine Dicke von ca. 40 µm aufweisen. Dies bedeutet, dass die reibungserhöhende Folie 3 deutlich dicker ist als die Trägerfolie 2. Insbesondere beträgt die Dicke der Trägerfolie 2 maximal 75 % oder lediglich maximal 50 % der Dicke der reibungserhöhenden Folie 3.

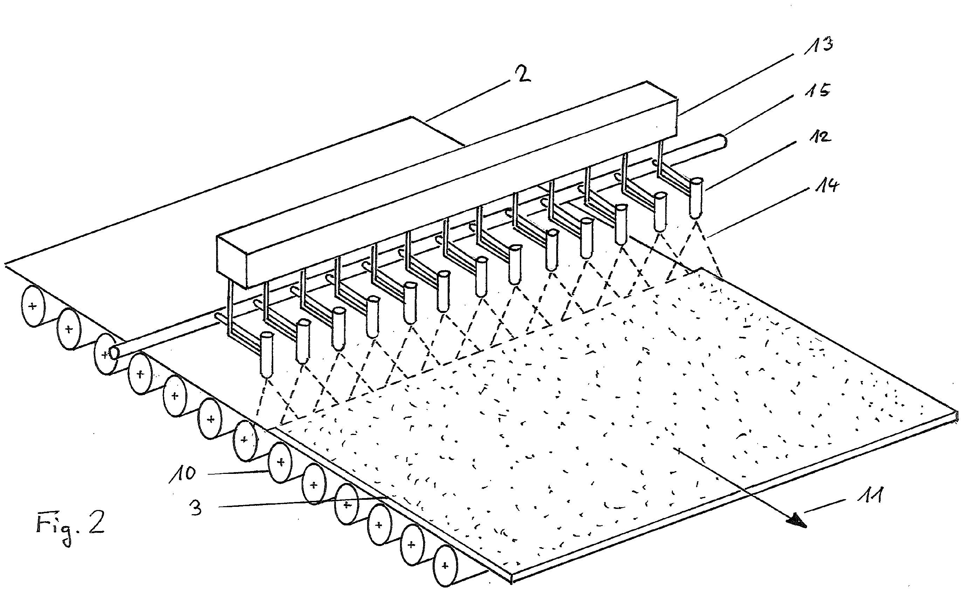

Die Herstellung des in Figur 1 dargestellten Folienverbunds 1 wird anhand von Figur 2 erläutert.

Figur 2 zeigt ein Ausführungsbeispiel einer Anordnung zur Herstellung des in Figur 1 dargestellten Folienverbunds 1 in einer perspektivischen Darstellung.

Die Anordnung weist eine Transporteinrichtung 10, beispielsweise in Form von Rollen, zum Transport der Trägerfolie 2 in einer durch einen Pfeil dargestellten Transportrichtung 11 auf Die Trägerfolie 2 kann insbesondere zur Stabilisierung und Glättung auf einen nicht figürlich dargestellten Rahmen aufgespannt sein. Oberhalb der Trägerfolie 2 sind mehrere Sprühdüsen 12 quer zur Transportrichtung 11 nebeneinander angeordnet. Jede Sprühdüse 12 ist mit einem Vorratsbehälter 13 verbunden, der mit einem Lack 14 gefüllt ist. Weiterhin ist jede Sprühdüse 12 mit einer Druckluft-Zufuhr 15 verbunden.

Beim Betrieb der in Figur 2 dargestellten Vorrichtung wird der den Sprühdüsen 12 zugeführte Lack 14 mittels Druckluft vernebelt und dadurch in einer dünnen Schicht gleichmäßig auf die Trägerfolie 2 aufgetragen. Auf diese Weise wird die reibungserhöhende Folie 3 ausgebildet. Die Schichtdicke des Auftrags lässt sich durch die Vorschubgeschwindigkeit der Trägerfolie 2 relativ zu den Sprühdüsen 12 regeln. Je größer die Vorschubgeschwindigkeit gewählt wird, desto dünner wird die Schichtdicke bei sonst gleichen Parametern ausgebildet. Durch Variation der Vorschubgeschwindigkeit können beispielsweise Schichtdicken zwischen 30 µm und 60 µm ausgebildet werden.

Die beschichtete Trägerfolie 2 wird auf eine gewünschte Länge zugeschnitten und beispielsweise 30 Minuten zur Initialtrocknung zwischengelagert. Danach können die Folienabschnitte zur Endhärtung übereinander gestapelt werden. Ebenso ist es auch möglich die Beschichtung mit Folienabschnitten durchzuführen, so dass der Zuschnitt bereits vor der Beschichtung erfolgen kann. Die Folienabschnitte können auf Rahmen aufgespannt werden und dann der Beschichtung zugeführt werden.

Der Lack 14 kann insbesondere eine aus der WO 2012/076584 A1 bekannte Zusammensetzung aufweisen, wobei der Binderanteil gegenüber den Angaben in der WO 2012/076584 A1 etwas erhöht sein kann, beispielsweise um 15 %. Außerdem kann ein gegenüber dem bekannten Lack 14 geringerer Vernetzungsgrad vorgesehen sein, um eine ausreichende Elastizität der reibungserhöhenden Folie 3 zu gewährleisten. Insbesondere kann die Vernetzung hauptsächlich in einer Richtung ausgebildet sein, so dass der Vernetzungsgrad parallel zu dieser Richtung höher ist als senkrecht zu dieser Richtung. Dies kann durch Blockieren funktionaler Enden von vernetzenden Lackbestandteilen erreicht werden.

Bei dem Lack 14 kann es sich um ein feuchtigkeitshärtendes Einkomponenten-Polyurethan-System, im Folgenden kurz 1K-PU-System, handeln, welches bei etwa 30 % Binder oder mehr (also etwa 70 % Feststoff in der getrockneten Schicht, d. h. ohne Lösungsmittel) leicht und gleichmäßig auftragbar, schnell trocknend und chemisch wie auch mechanisch stabil sowie trotz Elastizität durch die Füllstoffe wenig kompressibel ist. Das Aushärten des Lacks 14 erfolgt über eine Vernetzung von funktionalen Enden (Isocyanat) des PU-Systems. Das Volumen der getrockneten Schicht beträgt ungefähr 70 % des Volumens der nassen Schicht.

Der Lack 14 ist mit einer Vielzahl von Füllstoffzusätzen kompatibel, solange sie inert sind und nicht mit Polyurethan reagieren. Von harten Farbfüllstoffzusätzen wie Bariumsulfat bis zu weichen Zusätzen wie Talkumpulver oder PTFE ist prinzipiell eine unendliche Varianz denkbar.

Zur Erhöhung des Reibwerts enthält der Lack Titandiborid (TiB2) als Hartstoff in Pulverform. Interessant ist insbesondere der Bereich mesh 400 bis mesh 700, was einem größten Korn von ca. 50 µm bzw. ca. 100 µm entspricht. Titandiborid ist ein elektrisch leitendes Keramikpulver und zu akzeptablen Preisen und in geeigneten Korngrößen verfügbar. Bei Raumtemperatur weist Titandiborid einen spezifischen elektrischen Widerstand von 9 bis 15x10⁻⁶ Ωcm auf.

Weiterhin kann der Lack 14 Zinkpulver enthalten, wenn Korrosionsschutz oder Druckfestigkeit der Matrix gefordert wird. Die Viskosität des Lacks 14 kann über den Vorvemetzungsgrad des Polyurethans und den Lösungsmittelanteil eingestellt werden.

Insbesondere kann der Lack 14 einen Feststoffanteil von ca. 70 % enthalten, von dem z.B. etwa 40 % bis 60 % Zink und 60 % bis 40 % Titandiborid TiB2 sind.

Ein derartiger Lack 14 wirkt nicht als Isolator zwischen den Fügepartnern. Durch die hervorragende Leitfähigkeit des selbst inerten TiB2 werden die verbleibenden Zinkpartikel weiterhin elektrisch miteinander verbunden, wodurch die Zinkstaubmenge ohne Nachteil für den Korrosionsschutz deutlich abgesenkt werden kann. Es liegt ein aktiver kathodischer Korrosionsschutz vor. Ein Salzsprühtest zeigt, dass der Korrosionsschutz selbst bei einer partiellen Beschädigung der aus diesem Lack 14 hergestellten reibungserhöhenden Folie 3 erhalten bleibt. Dabei lässt sich ein Korrosionsschutz in gleicher Qualität wie bei einem reinen Polyurethan-Zink-Lack erreichen.

Der Lack 14 kann mit Hilfe einer Dissolverscheibe gemischt werden. Infolge der hohen inneren Reibung des Lacks 14 kann es beim Mischen zu einer starken Temperaturerhöhung kommen, die wiederum eine Vergrößerung der im Lack 14 enthaltenen Moleküle begünstigen kann. Außerdem kann es zu einer Zerkleinerung der Hartstoff-Partikel 7 kommen. Aus diesen Gründen werden die Mischungsdauer und die Rotationsgeschwindigkeit der Dissolverscheibe auf ein für eine ausreichende Mischung erforderliches Mindestmaß begrenzt.

Eine typische erfindungsgemäße Rezeptur sieht also folgendermaßen aus (die %-Angaben sind jeweils auf eine angegebene Basis bezogen und repräsentieren den jeweiligen Anteil daran in Vol%):
Der Lack 14 enthält einen Lösungsmittelanteil (z. B. Naphta) von 20 % bis 40 %, insbesondere 30 %.

Nach Abzug des Lösungsmittelanteils setzt sich der verbleibende Trockenanteil folgendermaßen zusammen, wobei als Bezugsgröße für die Prozentzahlen der gesamte Trockenanteil zugrunde gelegt wird:
- 20-40 %, insbesondere 30 %, einkomponentiges feuchtigkeitshärtendes Polyurethan (Basis aromatisches Polyisocyanat),
- 50-80 % Feststoffanteil,
- bis zu 10 % Additive (fest oder flüssig).

Bei einem Polyurethananteil von mehr als 40 % ist die Korrosionsschutzwirkung des Lacks 14 nicht mehr gewährleistet, da nicht mehr von einer durchgehenden elektrischen Verbindung über das gesamte Volumen der Lackschicht ausgegangen werden kann.

Der Feststoffanteil weist folgende Zusammensetzung auf, wobei als Bezugsgröße für die Prozentzahlen der gesamte Feststoffanteil zugrunde gelegt wird:
- 30-70 %, vorzugsweise 40-60 %, insbesondere 40 % Titandiborid in der Körnung mesh 700,
- 30-70 %, vorzugsweise 40-60 %, insbesondere 60 % Zink mit Körnung 5 µm.

Die Oberflächenrestfeuchte des TiB2 wird mit < 0,1 % spezifiziert, was wegen dem feuchtigkeitsreaktiven Binder bedeutsam ist. Bis zu 20 % des Titandiborids können durch Borcarbid B4C ersetzt werden. Das Zink wird dem Lack 14 insbesondere in Form von Zinkpulver zugemischt. Das Zinkpulver kann zum Teil auch durch Zinklamelle ersetzt werden. Sofern keine Zinklamelle enthalten ist, können Thixotropierungszusätze vorgesehen werden.

Typische deklarierte Inhaltsstoffe können sein:
Zinkpulver, Zinkstaub, stabilisiert / Zinkpulver, Zinkstaub, nichtstabilisiert / Zinkoxid / Zinklamellen / Zinkphosphat / 1,3,5-Trimethylbenzol / Mesitylen / Xylol, Isomerengemisch / Cumol / Diphenylmethandiisocyanat, Isomeren und Homologen /1,2,4-Trimethylbenzol / Lösungsmittelnaphta.

Um beim Besprühen der Trägerfolie 2 möglichst optimale Ergebnisse zu erzielen, muss verhindert werden, dass der Binder nach dem Auftrag im Nasszustand absackt. Das erfordert eine thixotrope Einstellung. Aus diesem Grund ist es von Vorteil, wenn dem Lack 14 ein Thixotropierungsmittel zugesetzt wird.

Der Anteil an lamellenförmigem Korrosionsschutzmaterial 8 kann auch ganz oder teilweise aus Eisenglimmer statt aus Zinklamellen bestehen.

Als Lack 14 kann anstelle eines 1-Komponenten-Polyurethans auch ein 2-Komponenten-Polyurethan oder ein 2-Komponenten-Epoxidharz zum Einsatz kommen.

Der auf diese Weise hergestellte Folienverbund 1 weist eine Haftung zwischen der reibungserhöhenden Folie 3 und der Trägerfolie 2 auf, die gerade so hoch ist, dass sich der Folienverbund 1 ohne Ablösungserscheinungen schneiden, stanzen, konfektionieren, transportieren und lagern lässt.

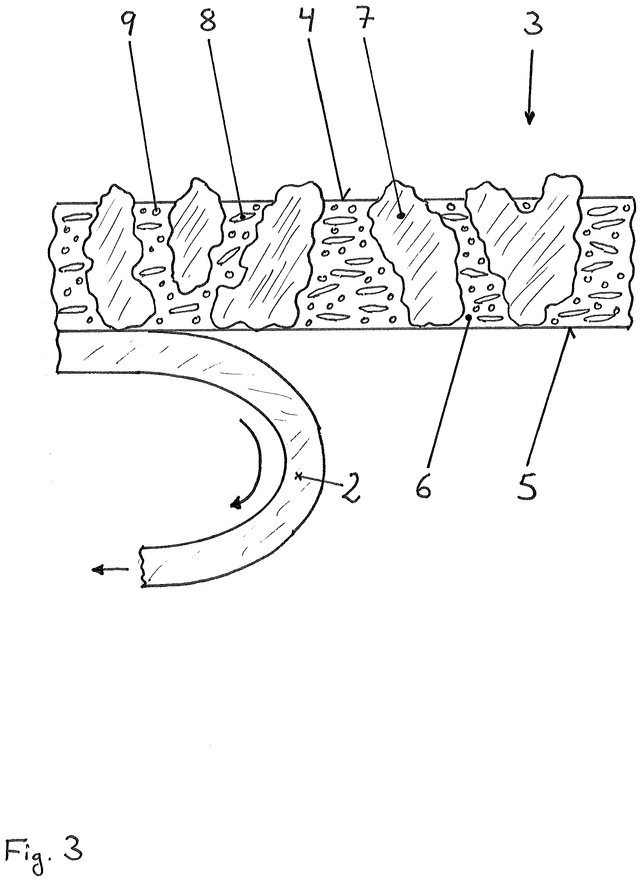

Vor der Verwendung der reibungserhöhenden Folie 3 wird diese durch Schneiden oder Stanzen des Folienverbunds 1 in die gewünschte Form gebracht. Danach wird die reibungserhöhende Folie 3 von der Trägerfolie 2 getrennt. Hierzu wird die Trägerfolie 2 stark umgelenkt und stumpfwinkelig abgezogen, während die reibungserhöhende Folie 3 weniger stark umgelenkt wird. Die aus dem Folienverbund 1 herausgelöste reibungserhöhende Folie 3 ist in Figur 3 dargestellt.

Figur 3 zeigt ein Ausführungsbeispiel der erfindungsgemäßen reibungserhöhenden Folie 3 in einer schematischen Schnittdarstellung.

Zur Verdeutlichung des Zusammenhangs zu Figur 1 ist in Figur 3 zusätzlich die Trägerfolie 2 in teilweise abgezogenen Zustand eingezeichnet. Im Bereich ihrer zweiten Hauptfläche 5 ist die reibungserhöhende Folie 3 glatt ausgebildet, da die zweite Hauptfläche 5 bei der Herstellung der reibungserhöhenden Folie 3 berührend an der glatten Oberfläche der Trägerfolie 2 anliegt. Insbesondere ragen die Hartstoff-Partikel 7 im Bereich der zweiten Hauptfläche 5 nicht aus der Polyurethan-Matrix 6 heraus. Im Gegensatz dazu ist die reibungserhöhende Folie 3 im Bereich ihrer ersten Hauptfläche 4 rau ausgebildet, da die erste Hauptfläche 4 bei der Herstellung der reibungserhöhenden Folie 3 nicht an der Trägerfolie 2 anliegt. Insbesondere ragen wenigstens einige der Hartstoff-Partikel 7 im Bereich der ersten Hauptfläche 4 aus der Polyurethan-Matrix 6 heraus. Die reibungserhöhende Folie 3 verfügt weder im Bereich ihrer ersten Hauptfläche 4 noch im Bereich ihrer zweiten Hauptfläche 5 über eine Klebewirkung.

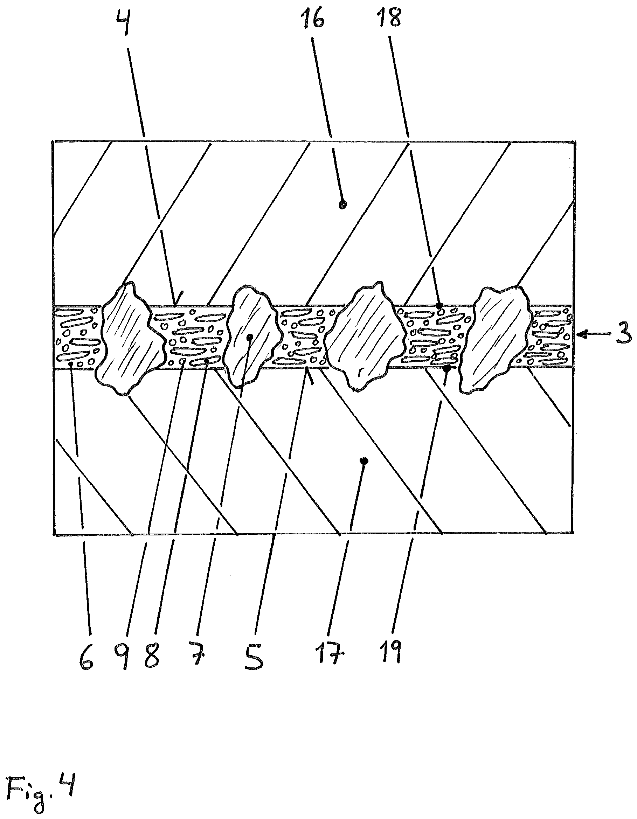

Die Verwendung der aus dem Folienverbund 1 gelösten reibungserhöhenden Folie 3 wird anhand von Figur 4 erläutert.

Figur 4 zeigt ein Ausführungsbeispiel einer erfindungsgemäß ausgebildeten reibschlüssigen Verbindung in einer schematischen Schnittdarstellung.

Die reibschlüssige Verbindung ist zwischen einem ersten Maschinenteil 16 und einem zweiten Maschinenteil 17 ausgebildet. Bei den Maschinenteilen 16, 17 kann es sich beispielsweise um eine Paarung aus einem Lagerring und einem Gehäuse- oder Rahmenteil, mit dem der Lagering durch die reibschlüssige Verbindung verdrehsicher verbunden ist, handeln. Ebenso kann es sich beispielsweise um eine Paarung aus zwei Lagerringen handeln. Das erste Maschinenteil 16 weist eine erste Anlagefläche 18 und das zweite Maschinenteil 17 eine zweite Anlagefläche 19 auf, die jeweils weitgehend plan ausgebildet sind.

Zur Ausbildung der reibschlüssigen Verbindung wird die reibungserhöhende Folie 3 beispielsweise an der ersten Anlagefläche 18 des ersten Maschinenteils 16 zur Anlage gebracht. Zu diesem Zeitpunkt ist das zweite Maschinenteil 17 so weit vom ersten Maschinenteil 16 beabstandet, dass dies problemlos möglich ist. Es kann wahlweise die erste Hauptfläche 4 oder die zweite Hauptfläche 5 der reibungserhöhenden Folie 3 mit der ersten Anlagefläche 18 des ersten Maschinenteils 16 zur Anlage gebracht werden. Im ersten Fall ist eine Lagekorrektur der reibungserhöhenden Folie 3 relativ zum ersten Maschinenteil 16 im weiteren Verlauf der Montage schwieriger als im zweiten Fall, da die erste Hauptfläche 4 der reibungserhöhenden Folie 3 rauer ist als die zweite Hauptfläche 5.

In einem weiteren Schritt wird die zweite Anlagefläche 19 des zweiten Maschinenteils 17 der reibungserhöhenden Folie 3 angenähert, so dass die reibungserhöhende Folie 3 zwischen dem ersten Maschinenteil 16 und dem zweiten Maschinenteil 17 eingeklemmt wird. Dabei wird der Anpressdruck zwischen dem ersten Maschinenteil 16 und dem zweiten Maschinenteil 17 bis zu einem vorgegebenen Wert erhöht. Da die Hartstoff-Partikel 7 Abmessungen aufweisen, die größer sind als der Abstand zwischen den Hauptflächen 4, 5 der reibungserhöhenden Folie 3, werden die Hartstoff-Partikel 7 sowohl gegen die erste Anlagefläche 18 des ersten Maschinenteils 16 als auch gegen die zweite Anlagefläche 19 des zweiten Maschinenteils 17 gedrückt. Dabei wird der Anpressdruck so hoch gewählt, dass wenigstens einige der Hartstoff-Partikel 7 sowohl in die erste Anlagefläche 18 als auch in die zweite Anlagefläche 19 eingedrückt werden und dadurch in beiden Oberflächen lokale Vertiefungen erzeugen. Wenn die Anlageflächen 18, 19 beider Maschineteile 16, 17 vollflächig an der Polyurethan-Matrix 6 der reibungserhöhenden Folie 3 anliegen ist nur noch eine geringfügige weitere Annäherung möglich, wobei der benötigte Anpressdruck stark ansteigt. Der Anpressdruck kann beispielsweise ca. 100 MPa betragen und dadurch erzeugt werden, dass die Maschinenteile 16, 17 mittels Schrauben gegeneinander verspannt werden. Der Anpressdruck muss in dieser Höhe nicht zwingend dauerhaft beibehalten werden. Ein Absinken bis auf 20 % seines ursprünglichen Werts führt in der Regel noch nicht zu einem Versagen der reibschlüssigen Verbindung. Wichtig ist aber, dass anfänglich ein ausreichend hoher Anpressdruck ausgeübt wird.

Eine Steigerung des Anpressdrucks von 100 MPa auf 300 MPa führt dann zu einer relativ geringen Restsetzung von maximal 2 µm. Ein Kriechen ist nicht zu beobachten. Die initiale Kompression liegt bei etwa 5µm bei einer Dicke der reibungserhöhenden Folie 3 von ca. 35 µm. Die gesamte Nachgiebigkeit der reibungserhöhenden Folie 3 ist wegen des Feststoffanteils von typisch 70 % dennoch als gering anzusehen. Hier helfen die Hartstoff-Partikel 7 zusätzlich, ein Mitkriechen von (gleitfähigen) Zinkanteilen zu vermeiden.

Ein anfänglich gegenüber z. B. Silikatlacken größere Ausgleichsfähigkeit der reibungserhöhenden Folie 3 durch Kriechen (plastisch) und Elastizität ist erwünscht, um Dickenunterschiede der reibungserhöhenden Folie 3 auszugleichen und eine vollflächige Anlage großer Fügeflächen erreichen zu können. Außerdem werden durch das Kriechen die Hartstoff-Partikel 7 freigelegt. Infolge des Kriechens kommt es auch zu einer Abdichtung oder Versiegelung, so dass beispielsweise keine korrosiven Flüssigkeiten zwischen die Fügeflächen eindringen können.

Eine reibungserhöhende Folie 3 mit 70 % Zink lässt sich (immer ausreichend große Berührflächen vorausgesetzt) um etwas mehr als 30 % zusammendrücken und erreicht dann eine quasimetallische Hartlage. Eine ebensolche reibungserhöhende Folie 3 mit nichtfließfähigen Hartstoff-Partikeln 7 weist eine noch geringere Kriechwirkung auf. Beispielsweise kommt ein 35 µm- Korn in einer 40 µm dicken reibungserhöhenden Folie 3 bei Montage gerade noch zur beidseitigen Hartlage.

In der Regel ist es ausreichend, wenn man für die Hartstoff-Partikel 7 eine Siebung verwendet, deren Maximalkorn oberhalb der angestrebten Dicke der reibungserhöhenden Folie 3 liegt, und deren Maximum der Gaußverteilung für die Korngröße noch innerhalb liegt. Wenn die Dicke der reibungserhöhenden Folie 3 nicht genau steuerbar ist, können größere Körner die Sicherheit in der Anwendung erhöhen.

Körner, die wesentlich kleiner sind als die Dicke der reibungserhöhenden Folie 3, und die sich nicht auf anderen Feststoffen abstützen können, sind in der nur teilelastischen Polyurethan-Matrix 6 wirkungslos und führen nicht zur mechanischen Verzahnung. Es ist entweder die Einbindung des Kornes in einer harten Matrix nötig (z. B. chemisch-Nickel) oder das Korn muss beide Montagepartner erreichen. Bei Wahl einer elastischen Matrix sind deswegen relativ große Körner zu verwenden. Andererseits ist es nicht erforderlich, dass alle Hartstoff-Partikel 7 in ihrem Durchmesser der Schichtdicke entsprechen. Die hohe Beladung mit Feststoffen aus Zink und TiB2 oder TiB2 und B4C sichert ab, dass auch bei kleinerem Korn keine volle Nachgiebigkeit in der Polyurethan-Matrix 6 besteht.

Aus diesen Gründen eignet sich beispielsweise eine Verteilung von Korngrößen, bei der maximal 75 % der Hartstoff-Partikel 7 eine Korngröße kleiner als 36 µm aufweisen. Weiterhin können wenigstens 10 % der Hartstoff-Partikel 7 eine Korngröße größer als 51 µm aufweisen. Wenigstens 5 % der Hartstoff-Partikel 7 können eine Korngröße größer als 61 µm aufweisen. Wenigstens 2 % der Hartstoff-Partikel 7 können eine Korngröße größer als 73 µm aufweisen. Außerdem kann vorgesehen sein, dass die Verteilungskurve für die Korngrößen, d. h. die prozentuale Anteile der Korngrößen aufgetragen über die Korngrößen, lediglich ein Maximum aufweist. Diese Werte gelten insbesondere für eine Dicke der reibungserhöhenden Folie 3 von 30 µm bis 45 µm.

Auf die beschriebene Weise werden formschlüssige Mikroverbindungen zwischen den Hartstoff-Partikeln 7 und den beiden Maschinenteilen 16, 17 ausgebildet, die einen sehr hohen Reibungskoeffizienten zur Folge haben. Bei geschliffenen Wälzlagerringen lässt sich beispielsweise ein Reibungskoeffizient von ca. 0,48 erzielen. An den Hartstoff-Partikeln 7 können das lamellenartige Korrosionsschutzmaterial 8 und/oder das pulvrige Korrosionsschutzmaterial 9 berührend anliegen und dadurch eine elektrisch leitende Verbindung ausbilden. Auch zwischen dem lamellenartigen Korrosionsschutzmaterial 8 und dem pulvrigen Korrosionsschutzmaterial 9 kommt es zu vielfachen Berührungen und somit zu elektrisch leitenden Verbindungen. Außerdem kommt es zu Berührungen der elektrisch leitenden Inhaltsstoffe der reibungserhöhenden Folie 3 mit der ersten Anlagefläche 18 und der zweiten Anlagefläche 19 der Maschinenteile 16, 17. Auf diese Weise ist eine durchgehende elektrisch leitende Verbindung über das gesamte Volumen der reibungserhöhenden Folie 3 ausgebildet, so dass das in der reibungserhöhenden Folie 3 enthaltene lamellenartige Korrosionsschutzmaterial 8 und das pulvrige Korrosionsschutzmaterial 9 die Anlageflächen 18, 19 zuverlässig vor Korrosion schützen können.

Außerdem ist die reibungserhöhenden Folie 3 durch das lamellenartigen Korrosionsschutzmaterial 8 und das pulvrige Korrosionsschutzmaterial 9 sehr tragfähig, so dass mit der reibungserhöhenden Folie 3 ein mechanisch sehr stabiler Verbund zwischen den Maschinenteilen 16, 17 ausgebildet werden kann, der auch durch zwischenzeitlich auftretende Druckspitzen nicht gelockert oder verschlissen wird und auch nicht in seiner Maßhaltigkeit beeinträchtig wird. Eine ähnliche Wirkung ließe sich auch mit sonstigen Feststoffen erzielen, die über eine ausreichende Tragfähigkeit verfügen, jedoch keinen Korrosionsschutz bieten. Alleine durch das Polyurethan würde dies jedoch nicht in nennenswertem Maß erreicht, da dies zu leicht nachgibt und durch kriechen oder fließen ausweicht.

Gemäß einem Ausführungsbeispiel wird die reibungserhöhende Folie 3 in einer Dicke von 20-45 µm ausgebildet. Geringere Dicken weisen grundsätzlich - auch bei konventionellem Zink- keinen ausreichenden Korrosionsschutz auf. Außerdem wird die reibungserhöhende Folie 3 mit abnehmender Dicke zunehmend instabil und es besteht das Risiko, dass die reibungserhöhende Folie 3 bei der Handhabung reißt. Der Lack 14 kann TiB2-Pulver in Siebung 400 mesh enthalten, die Größtkömer (x100) von etwa 50 µm und eine Größtmenge (x50) um 15 µm aufweist. Alternativ dazu kann der Lack 14 beispielsweise auch TiB2-Pulver in Siebung 700 mesh mit Größtkörnern (x100) von etwa 100 µm und einer Größtmenge (x50) um 28 µm enthalten. Die Körnung des Zinkpulvers wird so auf die Körnung des Hartstoffpulvers abgestimmt, dass man eine möglichst hohe Schüttdichte erreicht.

Gute Ergebnisse lassen sich beispielsweise mit einem Anteil von 60 % TiB2 in der Siebung 400 mesh bei einer Solldicke der reibungserhöhenden Folie 3 von 25±5 µm, insbesondere 25-30 µm, erzielen. Die Korngröße des Zinkpulvers beträgt ca. 5 µm. Bei einem Anpressdruck von 100 MPa ergibt sich eine Kompression der reibungserhöhenden Folie 3 um 4 µm. Danach sind etwaige anfängliche Unebenheiten der reibungserhöhenden Folie 3 weitgehend ausgeglichen und Hohlräume in der reibungserhöhenden Folie 3 weitgehend ausgefüllt, so dass die Maschinenteilen 16, 17 jeweils vollflächig an der reibungserhöhenden Folie 3 anliegen. Wird der Anpressdruck auf 300 MPa erhöht, reduziert sich die Dicke der reibungserhöhenden Folie 3 nochmals um 2 µm. Durch eine weitere Erhöhung des Anpressdrucks lässt sich keine nennenswerte weitere Reduzierung der Dicke der reibungserhöhenden Folie 3 erzielen. Dies resultiert im Wesentlichen aus der hohen Tragfähigkeit des zusammengepressten Zinkpulvers, das zudem durch die Hartstoff-Partikel 7 an einer lateralen Fließbewegung gehindert wird. Die Fließfähigkeit des Polyurethans wird durch das Zinkpulver und die Hartstoff-Partikel 7 ebenfalls stark reduziert. Somit wird insgesamt eine mechanisch hoch belastbare und sehr stabile reibungserhöhende Folie 3 ausgebildet. Für eine zuverlässige reibschlüssige Verbindung zweier Maschinenteile 16, 17 aus einem harten Stahl sollte der Anpressdruck unter den gegebenen Bedingungen wenigstens 100 MPa betragen.

Ähnliches gilt für 60% TiB2 in der Siebung 700 mesh bei einer Solldicke der reibungserhöhenden Folie 3 von 40±10 µm, insbesondere 35-40 µm. Auch hier beträgt die Korngröße des Zinkpulvers ca. 5 µm. Bei einem Anpressdruck von 100 MPa ergibt sich eine Kompression der reibungserhöhenden Folie 3 um 5 µm. Wird der Anpressdruck auf 300 MPa erhöht, reduziert sich die Dicke der reibungserhöhenden Folie 3 nochmals um 5 µm. Für eine zuverlässige reibschlüssige Verbindung zweier Maschinenteile 16, 17 aus einem harten Stahl sollte der Anpressdruck unter den gegebenen Bedingungen wenigstens 200 MPa betragen.

Ebenso ist beispielsweise auch ein Anteil von 40% TiB2 in der Siebung 700 mesh bei einer Solldicke der reibungserhöhenden Folie 3 von ca. 35 µm möglich. Auch hier beträgt die Korngröße des Zinkpulvers ca. 5 µm. Die Kompression der reibungserhöhenden Folie 3 bei einem Anpressdruck von 100 MPa variiert etwas mit dem Vernetzungsgrad des Polyurethans. Bei einer geringen Vernetzung ergibt sich eine Kompression der reibungserhöhenden Folie 3 um 5 µm. Bei einer höheren Vernetzung ist die Elastizität geringer und es ergibt sich dem gemäß auch eine etwas geringere Kompression um beispielsweise 4 µm. Wird der Anpressdruck auf 300 MPa erhöht, reduziert sich die Dicke der reibungserhöhenden Folie 3 in beiden Fällen nochmals um 1 bzw. 2 µm, so dass sich jeweils insgesamt eine Reduzierung um 6 µm ergibt.

Beide im Lack 14 enthaltenen Pulver - oder falls zusätzlich B4C zum Einsatz kommt, alle drei Pulver - werden größenmäßig aufeinander abgestimmt und für einen Soll-Dickenbereich der fertigen reibungserhöhenden Folie 3 konzipiert.

Bei einer weiteren Variante kommen zusätzlich Zirkonoxidkugeln (ZrO2 mit SiO) mit einer Korngröße von z. B 10-30 µm zum Einsatz. Diese weisen nur eine Härte von 700 HV auf, stellen aber eine inkompressible Feststoff-Füllung dar und besitzen keine Splittrigkeit. Durch ihre kugelige Form und sehr genaue Größensiebung verbunden mit diesen Eigenschaften ergeben sie bei Bedarf einen definierten Abstandhalter. Soll die reibungserhöhende Folie 3 im eingebauten Zustand eine definierte Dicke aufweisen, kann ein Anteil an Zirkonoxidkugeln das Gleiten der Polyurethan-Matrix 6 und die Eindringtiefe der Hartstoff-Partikel 7 bei dieser Dicke anhalten.

### Bezugszeichen

- 1: Folienverbund
- 2: Trägerfolie
- 3: Reibungserhöhende Folie
- 4: Erste Hauptfläche
- 5: Zweite Hauptfläche
- 6: Polyurethan-Matrix
- 7: Hartstoff-Partikel
- 8: Lamellenartiges Korrosionsschutzmaterial
- 9: Pulvriges Korrosionsschutzmaterial
- 10: Transporteinrichtung
- 11: Transportrichtung
- 12: Sprühdüse
- 13: Vorratsbehälter
- 14: Lack
- 15: Druckluft-Zufuhr
- 16: Erstes Maschinenteil
- 17: Zweites Maschinenteil
- 18: Erste Anlagefläche
- 19: Zweite Anlagefläche

## Patentansprüche

1. Reibungserhöhende Folie mit Hartstoff-Partikeln (7), **dadurch gekennzeichnet, dass** die Hartstoff-Partikel (7) aus einer Titan-Bor-Verbindung hergestellt sind und derart in eine Polyurethan-Matrix (6) eingebettet sind, dass wenigstens einige der Hartstoff-Partikel (7) aus der Polyurethan-Matrix (6) herausragen und dass die reibungserhöhende Folie ein korrosionsschützendes Material (8, 9) aufweist.

2. Reibungserhöhende Folie nach Anspruch 1, mit einer ersten Hauptfläche (4) und einer zweiten Hauptfläche (5), wobei wenigstens einige der Hartstoff-Partikel (7) im Bereich der ersten Hauptfläche (4) um einen Überstand aus der Polyurethan-Matrix (6) herausragen und im Bereich der zweiten Hauptfläche (5) mit der Polyurethan-Matrix (6) abschließen oder von dieser mit einer Restdicke abgedeckt sind und der Überstand der Hartstoff-Partikel (7) jeweils größer ist als die zugehörige Restdicke.

3. Reibungserhöhende Folie nach Anspruch 2, wobei vor dem Einbau der reibungserhöhenden Folie (3) lediglich im Bereich der ersten Hauptfläche (4) Hartstoff-Partikel (7) aus der Polyurethan-Matrix (6) herausragen.

4. Reibungserhöhende Folie nach einem der Ansprüche 2 oder 3, wobei nach dem Einbau der reibungserhöhenden Folie (3) im Bereich der ersten Hauptfläche (4) und im Bereich der zweiten Hauptfläche (5) Hartstoff-Partikel (7) aus der Polyurethan-Matrix (6) herausragen.

5. Reibungserhöhende Folie nach einem der vorhergehenden Ansprüche, wobei die reibungserhöhende Folie (3) zusätzlich zu den Hartstoff-Partikeln (7) aus einer Titan-Bor-Verbindung weitere Hartstoff-Partikel enthält.

6. Folienverbund aus einer Trägerfolie (2) und einer reibungserhöhenden Folie (3), **dadurch gekennzeichnet, dass** die reibungserhöhende Folie (3) nach einem der Ansprüche 1 bis 5 ausgebildet ist und mit der Trägerfolie (2) lösbar verbunden ist.

7. Folienverbund nach Anspruch 7, wobei die reibungserhöhende Folie (3) gemäß einem der Ansprüche 1 bis 6 ausgebildet ist.

8. Verwendung einer reibungserhöhenden Folie (3) mit Hartstoff-Partikeln (7) zur Ausbildung einer reibschlüssigen Verbindung zwischen einem ersten Maschinenteil (16) und einem zweiten Maschinenteil (17), **dadurch gekennzeichnet, dass** die Hartstoff-Partikel (7) aus einer Titan-Bor-Verbindung hergestellt sind und derart in eine Polyurethan-Matrix (6) eingebettet sind, dass wenigstens einige der Hartstoff-Partikel (7) aus der Polyurethan-Matrix (6) herausragen.

9. Verfahren zur Herstellung einer reibungserhöhenden Folie (3), **dadurch gekennzeichnet, dass** ein Polyurethanlack (14), welcher Hartstoff-Partikel (7) aus einer Titan-Bor-Verbindung enthält, auf eine Trägerfolie (2) aufgesprüht wird.

10. Verfahren nach Anspruch 9, wobei die reibungserhöhende Folie (3) von der Trägerfolie (2) abgezogen wird.

11. Anordnung aus einem ersten Maschinenteil (16), das eine erste Anlagefläche (18) aufweist und einem zweiten Maschinenteil (17), das eine zweite Anlagefläche (19) aufweist, wobei
- zwischen der ersten Anlagefläche (18) und der zweiten Anlagefläche (19) eine reibungserhöhende Folie (3) mit Hartstoff-Partikeln (7) angeordnet ist und
- die erste Anlagefläche (18) und die zweite Anlagefläche (19) gegeneinander vorgespannt sind,
**dadurch gekennzeichnet, dass** die reibungserhöhende Folie (3) nach einem der Ansprüche 1 bis 5 ausgebildet ist.

12. Verfahren zur Ausbildung einer reibschlüssigen Verbindung zwischen einem ersten Maschinenteil (16) und einem zweiten Maschinenteil (17), **dadurch gekennzeichnet, dass**
- eine reibungserhöhende Folie (3) gemäß Anspruch 9 hergestellt wird,
- die reibungserhöhende Folie (3) von der Trägerfolie (2) abgezogen wird und zwischen einer ersten Anlagefläche (18) des ersten Maschinenteils (16) und einer zweite Anlagefläche (19) des zweiten Maschinenteils (17) angeordnet wird und
- das erste Maschinenteil (16) und das zweite Maschinenteil (17) im Bereich der ersten Anlagefläche (18) und der zweite Anlagefläche (19) gegeneinander gepresst werden und dadurch wenigstens einige der in der reibungserhöhenden Folie (3) enthaltenen Hartstoff-Partikel (7) in die erste Anlagefläche (18) und in die zweite Anlagefläche (19) eingedrückt werden.

## Claims

1. Friction-increasing foil with particles (7) of hard material, **characterized in that** the particles (7) of hard material have been produced from a titanium-boron compound and have been embedded in such a way into a polyurethane matrix (6) that at least some of the particles (7) of hard material protrude from the polyurethane matrix (6) and that the friction-increasing foil comprises a corrosion-protection material (8, 9).

2. Friction-increasing foil according to Claim 1, with a first main surface (4) and with a second main surface (5), where at least some of the particles (7) of hard material protrude in the region of the first main surface (4) from the polyurethane matrix (6) to form a projection and in the region of the second main surface (5) are flush with the polyurethane matrix (6) or are covered by a residual thickness of the same, and the projection of the particles (7) of hard material is always greater than the associated residual thickness.

3. Friction-increasing foil according to Claim 2, where prior to the incorporation of the friction-increasing foil (3) particles (7) of hard material protrude from the polyurethane matrix (6) only in the region of the first main surface (4).

4. Friction-increasing foil according to Claim 2 or 3, where after incorporation of the friction-increasing foil (3) particles (7) of hard material protrude from the polyurethane matrix (6) in the region of the first main surface (4) and in the region of the second main surface (5).

5. Friction-increasing foil according to any of the preceding claims, where the friction-increasing foil (3) comprises other particles of hard material in addition to the particles (7) of hard material made of a titanium-boron compound.

6. Foil composite made of a supportive foil (2) and of a friction-increasing foil (3), **characterized in that** the friction-increasing foil (3) is designed according to any of Claims 1 to 5 and has been releasably connected to the supportive foil (2).

7. Foil composite according to Claim 7, where the friction-increasing foil (3) is designed according to any of Claims 1 to 6.

8. Use of a friction-increasing foil (3) with particles (7) of hard material for developing a frictional connection between a first machine part (16) and a second machine part (17), **characterized in that** the particles (7) of hard material have been produced from a titanium-boron compound and have been embedded into a polyurethane matrix (6) in a manner such that at least some of the particles (7) of hard material protrude from the polyurethane matrix (6).

9. Process for the production of a friction-increasing foil (3), **characterized in that** a polyurethane lacquer (14) which comprises particles (7) of hard material made of a titanium-boron compound is applied by spraying to a supportive foil (2).

10. Process according to Claim 9, where the friction-increasing foil (3) is peeled from the supportive foil (2).

11. Arrangement made of a first machine part (16) which has a first contact surface (18) and of a second machine part (17) which has a second contact surface (19), where
- between the first contact surface (18) and the second contact surface (19) there is arranged a friction-increasing foil (3) with particles (7) of hard material and
- the first contact surface (18) and the second contact surface (19) have been preloaded against one another,
**characterized in that** the friction-increasing foil (3) is designed according to any of Claims 1 to 5.

12. Method for developing a frictional connection between a first machine part (16) and a second machine part (17), **characterized in that**
- a friction-increasing foil (3) is produced according to Claim 9,
- the friction-increasing foil (3) is peeled from the supportive foil (2) and is arranged between a first contact surface (18) of the first machine part (16) and a second contact surface (19) of the second machine part (17) and
- the first machine part (16) and the second machine part (17) are forced against one another in the region of the first contact surface (18) and of the second contact surface (19), and thus at least some of the particles (7) of hard material comprised in the friction-increasing foil (3) become impressed into the first contact surface (18) and into the second contact surface (19).

## Revendications

1. Feuille augmentant la friction contenant des particules en une matière dure (7), **caractérisée en ce que** les particules en une matière dure (7) sont fabriquées en un composé de titane-bore et incorporées dans une matrice de polyuréthane (6) de sorte qu'au moins certaines des particules en une matière dure (7) dépassent de la matrice de polyuréthane (6), et **en ce que** la feuille augmentant la friction comprend un matériau anticorrosion (8, 9).

2. Feuille augmentant la friction selon la revendication 1, comprenant une première surface principale (4) et une seconde surface principale (5), au moins certaines des particules en une matière dure (7) dépassant de la matrice de polyuréthane (6) d'une saillie dans la zone de la première surface principale (4) et finissant avec la matrice de polyuréthane (6) dans la zone de la seconde surface principale (5) ou étant recouvertes par celle-ci avec une épaisseur résiduelle, et la saillie des particules en une matière dure (7) étant à chaque fois plus grande que l'épaisseur résiduelle correspondante.

3. Feuille augmentant la friction selon la revendication 2, dans laquelle, avant la mise en place de la feuille augmentant la friction (3), des particules en une matière dure (7) ne dépassent de la matrice de polyuréthane (6) que dans la zone de la première surface principale (4).

4. Feuille augmentant la friction selon l'une quelconque des revendications 2 ou 3, dans laquelle, après la mise en place de la feuille augmentant la friction (3), des particules en une matière dure (7) dépassent de la matrice de polyuréthane (6) dans la zone de la première surface principale (4) et dans la zone de la seconde surface principale (5).

5. Feuille augmentant la friction selon l'une quelconque des revendications précédentes, dans laquelle la feuille augmentant la friction (3) contient d'autres particules en une matière dure en plus des particules en une matière dure (7) en un composé de titane-bore.

6. Feuille composite constituée par une feuille support (2) et une feuille augmentant la friction (3), **caractérisée en ce que** la feuille augmentant la friction (3) est configurée selon l'une quelconque des revendications 1 à 5 et reliée de manière amovible avec la feuille support (2).

7. Feuille composite selon la revendication 7, dans laquelle la feuille augmentant la friction (3) est configurée selon l'une quelconque des revendications 1 à 6.

8. Utilisation d'une feuille augmentant la friction (3) contenant des particules en une matière dure (7) pour la formation d'une liaison par friction entre une première partie de machine (16) et une seconde partie de machine (17), **caractérisée en ce que** les particules en une matière dure (7) sont fabriquées à partir d'un composé de titane-bore, et incorporées dans une matrice de polyuréthane (6) de sorte qu'au moins certaines des particules en une matière dure (7) dépassent de la matrice de polyuréthane (6).

9. Procédé de fabrication d'une feuille augmentant la friction (3), **caractérisé en ce qu'**un vernis de polyuréthane (14), qui contient des particules en une matière dure (7) en un composé de titane-bore, est pulvérisé sur une feuille support (2).

10. Procédé selon la revendication 9, dans lequel la feuille augmentant la friction (3) est enlevée de la feuille support (2).

11. Agencement d'une première partie de machine (16), qui comprend une première surface de contact (18), et d'une seconde partie de machine (17), qui comprend une seconde surface de contact (19), dans lequel
- une feuille augmentant la friction (3) contenant des particules en une matière dure (7) est agencée entre la première surface de contact (18) et la seconde surface de contact (19), et
- la première surface de contact (18) et la seconde surface de contact (19) sont précontraintes l'une contre l'autre,
**caractérisé en ce que** la feuille augmentant la friction (3) est configurée selon l'une quelconque des revendications 1 à 5.

12. Procédé de formation d'une liaison par friction entre une première partie de machine (16) et une seconde partie de machine (17), **caractérisé en ce que**
- une feuille augmentant la friction (3) selon la revendication 9 est fabriquée,
- la feuille augmentant la friction (3) est enlevée de la feuille support (2), et agencée entre une première surface de contact (18) de la première partie de machine (16) et une seconde surface de contact (19) de la seconde partie de machine (17), et
- la première partie de machine (16) et la seconde partie de machine (17) sont appuyées l'une contre l'autre dans la zone de la première surface de contact (18) et de la seconde surface de contact (19), au moins certaines des particules en une matière dure (7) contenues dans la feuille augmentant la friction (3) étant ainsi poussées dans la première surface de contact (18) et dans la seconde surface de contact (19).
